# EUROPÄISCHE PATENTSCHRIFT

(11) **EP 1 270 146 B1**
(45) Veröffentlichungstag und Bekanntmachung des Hinweises auf die Patenterteilung: **07.03.2007**
(21) Anmeldenummer: 02013683.4
(22) Anmeldetag: 20.06.2002
(51) Int. Cl.: B23Q 39/04, B23B 3/30, B23B 3/16

(54) **Drehmaschine**
Lathe
Tour

(30) Priorität: 22.06.2001 DE 10131733
(43) Veröffentlichungstag der Anmeldung: 02.01.2003
(73) Patentinhaber: Traub Drehmaschinen GmbH & Co. KG, 73262 Reichenbach (DE)
(72) Erfinder: Baumann, Ulrich, 73252 Lenningen (DE)
(74) Vertreter: Hoeger, Stellrecht & Partner Patentanwälte

(56) Entgegenhaltungen:
- EP-A- 0 476 598
- DE-A- 3 320 940
- DE-A- 19 621 406

## Beschreibung

Die Erfindung betrifft eine Drehmaschine umfassend ein Maschinengestell, eine am Maschinengestell gehaltene erste und um eine erste Spindelachse drehbare Arbeitsspindel mit einer ersten Aufnahme für ein erstes Werkstück, mindestens einen einem ersten Arbeitsraum zugeordneten ersten Werkzeugträger, welcher zur Bearbeitung des ersten Werkstücks in einer X-Richtung quer zur ersten Spindelachse gesteuert bewegbar ist, eine um eine zweite Spindelachse drehbare zweite Arbeitsspindel, welche eine zweite Werkstückaufnahme für ein zweites Werkstück aufweist und welche gegenüber der ersten Arbeitsspindel in einer quer zur X-Richtung verlaufenden Querrichtung von einer mit der zweiten Spindelachse zur ersten Spindelachse koaxialen Übergabestellung in eine nicht koaxiale Arbeitsstellung bringbar ist, in welcher die erste und zweite Spindelachse im Abstand voneinander angeordnet sind, einen ersten frontseitigen Werkzeugträger zur Bearbeitung des ersten Werkstücks, der durch eine Bewegung quer zur X-Richtung mit mindestens einem Werkzeug von einer inaktiven in eine aktive Stellung und umgekehrt bewegbar ist und mindestens einen einem gegenüber dem ersten Arbeitsraum quer zur ersten Spindelachse versetzt angeordneten zweiten Arbeitsraum zugeordneten zweiten Werkzeugträger zur Bearbeitung des zweiten Werkstücks.

Eine derartige Drehmaschine ist aus der deutschen Patentanmeldung 196 21 406 bekannt. Eine ähnliche Drehmaschine, die dem Oberbegriff von Anspruch 1 zu Grunde gelegt wurde, ist aus EP-A-0 476 598 bekannt.

Bei diesen Drehmaschinen besteht das Problem, daß die Bearbeitung des zweiten Werkstücks gleichzeitig mit dem ersten Werkstück Probleme hinsichtlich der Steuerung und Werkzeugauswahl aufwirft.

Der Erfindung liegt daher die Aufgabe zugrunde, eine Drehmaschine der gattungsgemäßen Art derart zu verbessern, daß diese eine möglichst günstige Bearbeitung des zweiten Werkstücks bei möglichst einfachem Aufbau erlaubt.

Diese Aufgabe wird durch eine Drehmaschine gemäß Anspruch 1 gelöst.

Der Vorteil der erfindungsgemäßen Lösung ist darin zu sehen, daß durch das Vorsehen von mindestens zwei zweiten Werkzeugträgern im zweiten Arbeitsraum und durch Trennen der Bearbeitung des zweiten Werkstücks im zweiten Arbeitsraum aufgrund der Zuordnung der Werkzeuge zu zwei Ebenen die Möglichkeit besteht, das zweite Werkstück optimal zu bearbeiten, ohne die Bearbeitung des ersten Werkstücks zu beeinträchtigen.

Hinsichtlich der Lage der Ebenen wurden bislang keine näheren Angaben gemacht. So ist es für eine möglichst einfache Steuerung der Drehmaschine vorteilhaft, wenn die erste Ebene stationär bezüglich des Maschinengestells angeordnet ist.

Eine besonders günstige Lösung sieht vor, daß die erste Ebene durch die erste Spindelachse hindurch verläuft, so daß ausgehend von der Übergabestellung, in welcher die erste und die zweite Spindelachse koaxial zueinander ausgerichtet sind, das Verfahren der zweiten Arbeitsspindel in der Querrichtung ohne weitere Bewegung dazu führt, daß sich das zweite Werkstück mit den der ersten Ebene zugeordneten Werkzeugen des zweiten Werkzeugträgers bearbeiten läßt.

Hinsichtlich der Anordnung der zweiten Ebene wurden ebenfalls bislang keine näheren Angaben gemacht. So sieht eine besonders günstige Lösung vor, daß die zweite Ebene auf einer dem ersten Werkzeugträger gegenüberliegenden Seite der ersten Ebene angeordnet ist, da damit in besonders vorteilhafter Weise bei einer Bearbeitung des zweiten Werkstücks bezüglich der zweiten Ebene keinerlei räumliche Kollisionsprobleme mit dem ersten Werkzeugträger zu befürchten sind.

Um auch die Steuerung bei der Bearbeitung bezüglich der zweiten Ebene möglichst einfach durchführen zu können, ist vorzugsweise vorgesehen, daß die zweite Ebene stationär bezüglich des Maschinengestells angeordnet ist.

Darüber hinaus wurden im Zusammenhang mit der bisherigen Erläuterung der einzelnen Ausführungsformen nicht näher darauf eingegangen, wie die erste Ebene in Relation zur Querrichtung verläuft.

Aus Gründen einer möglichst einfachen Steuerung der Drehmaschine ist es besonders vorteilhaft, wenn die erste Ebene parallel zur Querrichtung verläuft.

Besonders günstig läßt sich die erfindungsgemäße Drehmaschine dann steuern, wenn die Ebenen ungefähr senkrecht zur X-Richtung verlaufen.

Hinsichtlich der Bewegung des ersten frontseitigen Werkzeugträgers von der inaktiven in die aktive Stellung und umgekehrt wurden bislang keine näheren Angaben gemacht. So ist es besonders günstig, wenn der erste frontseitige Werkzeugträger durch eine Bewegung parallel zur Querrichtung zwischen der aktiven und der inaktiven Stellung hin- und herbewegbar ist. Ein konstruktiv besonders einfacher Aufbau ergibt sich dann, wenn der erste frontseitige Werkzeugträger und die zweite Arbeitsspindel auf einem gemeinsamen, in der Querrichtung bewegbaren Querschlitten sitzen, so daß die Bewegung des ersten frontseitigen Werkzeugträgers und der zweiten Arbeitsspindel durch einen gemeinsamen Querschlitten und somit einen einzigen Antrieb realisierbar ist.

Damit sind auch die Werkzeuge des ersten frontseitigen Werkzeugträgers in der Querrichtung stets in einem definierten Abstand von der zweiten Spindelachse angeordnet.

Prinzipiell wäre keine Bewegbarkeit des ersten frontseitigen Werkzeugträgers quer zur Querrichtung erforderlich. Besonders günstig ist es jedoch, wenn der zweite frontseitige Werkzeugträger und die zweite Arbeitsspindel auf einem gemeinsamen in Richtung quer zur Querrichtung und quer zur Spindelachse bewegbaren Basisschlitten sitzen, wobei dieser Basisschlitten vorzugsweise in X-Richtung bewegbar ist.

Diese Lösung schafft die Möglichkeit, die gesamte Einheit umfassend die zweite Arbeitsspindel und den ersten frontseitigen Werkzeugträger noch zusätzlich quer zur Querrichtung zu bewegen und somit beispielsweise in einfacher Weise gesteuert die erste Ebene anzufahren.

Ferner hat sich eine Konstruktion als besonders günstig erwiesen, bei welcher der Querschlitten auf dem gemeinsamen Basisschlitten in der Querrichtung bewegbar angeordnet ist, so daß der häufig zu bewegende Querschlitten von dem Basisschlitten getragen wird, der üblicherweise mit einer geringeren Häufigkeit zu bewegen ist und insbesondere eine geringere Dynamik aufweisen muß.

Hinsichtlich der Relativbewegung zwischen dem ersten frontseitigen Werkzeugträger und dem ersten Werkstück bei der Bearbeitung desselben sind die unterschiedlichsten Möglichkeiten denkbar. Prinzipiell wäre es ausreichend, für die Bearbeitung mit den Werkzeugen des ersten frontseitigen Werkzeugträgers das Werkstück in Richtung desselben zu verschieben, was insbesondere dann möglich ist, wenn die erste Arbeitsspindel in Z-Richtung bewegbar ist.

Um jedoch gleichzeitig mit den Werkzeugen des ersten Werkzeugträgers und den Werkzeugen des ersten frontseitigen Werkzeugträgers das erste Werkstück bearbeiten zu können, ist es besonders günstig, wenn der erste frontseitige Werkzeugträger in Richtung parallel zur ersten Spindelachse bewegbar ist. Dies läßt sich besonders günstig dadurch realisieren, daß der erste frontseitige Werkzeugträger auf einem in Z-Richtung bewegbaren Z-Schlitten sitzt, welcher seinerseits auf dem Querschlitten sitzt.

Ferner ist es zur Bearbeitung des zweiten Werkstücks ebenfalls günstig, wenn die zweite Arbeitsspindel in Richtung parallel zur zweiten Spindelachse bewegbar ist.

Aus diesem Grund ist vorzugsweise vorgesehen, daß die zweite Arbeitsspindel auf einem Z-Schlitten sitzt, welcher seinerseits auf dem Querschlitten angeordnet ist.

Prinzipiell wäre es denkbar, zwei Z-Schlitten auf dem Querschlitten vorzusehen. Konstruktiv ist es jedoch besonders einfach, wenn der erste frontseitige Werkzeugträger und die zweite Arbeitsspindel gemeinsam in Richtung der Spindelachse bewegbar sind und somit beispielsweise auf einem gemeinsamen Z-Schlitten sitzen.

Insbesondere ist dabei eine vorteilhafte konstruktive Lösung darin zu sehen, daß der erste frontseitige Werkzeugträger und die zweite Arbeitsspindel eine gemeinsam, sowohl in X-Richtung als auch in Querrichtung und auch in Z-Richtung bewegbare Einheit bilden, so daß deren Ansteuerung äußerst einfach realisiert werden kann und insbesondere auch eine hohe relative Stabilität zwischen dem ersten frontseitigen Werkzeugträger und der zweiten Arbeitsspindel gewährleistet.

Hinsichtlich der Anordnung der Werkzeuge des ersten frontseitigen Werkzeugträgers wurden bislang keine näheren Angaben gemacht. So sieht eine konstruktiv besonders günstige Lösung vor, daß der erste frontseitige Werkzeugträger in einer Längsrichtung nebeneinander angeordnete Werkzeuge aufweist.

Diese Werkzeuge könnten beispielsweise in einer in der Längsrichtung verlaufenden Zickzacklinie angeordnet sein.

Besonders günstig ist es jedoch, wenn die Werkzeuge in einer in der Längsrichtung verlaufenden Reihe angeordnet sind, da damit die Möglichkeit besteht, durch Verfahren des ersten frontseitigen Werkzeugträgers in der Längsrichtung jeweils eines der Werkzeuge in der Arbeitsstellung zu positionieren.

Dies ist besonders günstig dann realisierbar, wenn die Längsrichtung parallel zur Querachse verläuft.

Hinsichtlich der Anordnung der Werkzeuge des ersten frontseitigen Werkzeugträgers relativ zur ersten Ebene wurden bislang keine näheren Angaben gemacht. So sieht ein besonders vorteilhaftes Ausführungsbeispiel vor, daß die Werkzeuge des ersten frontseitigen Werkzeugträgers einer durch die zweite Spindelachse hindurchverlaufenden Ebene zugeordnet sind, das heißt, daß bei Verschieben dieser Ebene so, daß diese durch die erste Spindelachse verläuft, die Werkzeuge des ersten frontseitigen Werkzeugträgers jeweils in Arbeitsstellung bringbar und in dieser Stellung zur Bearbeitung einsetzbar sind, ohne daß eine Bewegung quer zu dieser Ebene entweder beim Wechsel von einem Werkzeug zum andern oder beim Bearbeiten mit einem der Werkzeuge erforderlich ist.

Hinsichtlich der Anordnung der zweiten Werkzeugträger relativ zum zweiten Arbeitsraum wurden bislang keine näheren Angaben gemacht. So sieht ein vorteilhaftes Ausführungsbeispiel vor, daß einer der zweiten Werkzeugträger frontseitig des zweiten Arbeitsraums angeordnet ist, das heißt an einer Frontseite des zweiten Arbeitsraums und somit gegenüberliegend der zweiten Arbeitsspindel angeordnet ist.

Vorzugsweise ist dieser frontseitige zweite Werkzeugträger so ausgebildet, daß er mehrere in einer Längsrichtung nebeneinander angeordnete Werkzeuge aufweist.

Dabei könnten diese Werkzeuge beispielsweise in einer Zickzackanordnung in Längsrichtung angeordnet sein.

Besonders günstig ist es jedoch, wenn die Werkzeuge in einer in der Längsrichtung verlaufenden Reihe angeordnet sind.

Um die Werkzeuge in einfacher Weise in Arbeitsstellung bringen zu können, ist vorzugsweise vorgesehen, daß die Längsrichtung, in welcher die Werkzeuge des zweiten frontseitigen Werkzeugträgers angeordnet sind, parallel zur Querrichtung verläuft.

Hinsichtlich der Anordnung des anderen der zweiten Werkzeugträger relativ zum Maschinengestell wurden bislang keine näheren Angaben gemacht. So ist es beispielsweise denkbar, den anderen der zweiten Werkzeugträger relativ zum Maschinengestell bewegbar anzuordnen, beispielsweise auch bewegbar in X-Richtung oder in der Querrichtung.

Eine besonders einfache konstruktive Lösung ergibt sich jedoch dann, wenn der andere der zweiten Werkzeugträger in Richtungen quer zu den Spindelachsen stationär am Maschinengestell angeordnet ist, so daß bei einem Bearbeiten des zweiten Werkstücks mittels Werkzeugen des anderen der zweiten Werkzeugträger die Relativbewegung zwischen diesem Werkzeug und dem zweiten Werkstück durch Bewegen der zweiten Arbeitsspindel in den Richtungen quer zu den Spindelachsen erfolgt.

Eine konstruktiv besonders günstige Lösung sieht vor, daß einer der zweiten Werkzeugträger stationär am Maschinengestell angeordnet ist.

In dem Fall, in dem der Werkzeugträger, dessen Werkzeuge der zweiten Ebene zugeordnet sind, in den Richtungen quer zu den Spindelachsen stationär am Maschinengestell angeordnet ist, ist es für eine Bearbeitung des zweiten Werkstücks teilweise nicht ausreichend, dieses nur in der zweiten Ebene zu bewegen, sondern es kann auch erforderlich sein, eine Bewegung des zweiten Werkstücks quer zur zweiten Ebene durchzuführen, um das Werkzeug in einer Richtung quer zu der Spindelachse zustellen zu können.

Diese Bewegung erfolgt jedoch vorzugsweise allein durch Bewegung der zweiten Arbeitsspindel in diesen Richtungen, während das jeweilige Werkzeug relativ zur zweiten Ebene in einer stationären Position verbleibt.

Hinsichtlich der Ausrichtung eines anderen der zweiten Werkzeugträger relativ zum zweiten Arbeitsraum wurden bislang noch keine näheren Angaben gemacht. So sieht ein vorteilhaftes Ausführungsbeispiel vor, daß ein anderer der zweiten Werkzeugträger frontseitig des zweiten Arbeitsraums angeordnet ist.

Vorzugsweise ist dabei der andere der zweiten Werkzeugträger ebenfalls so ausgebildet, daß er mehrere Werkzeuge aufweist.

Diese mehreren Werkzeuge können in unterschiedlichster Art und Weise angeordnet sein. Beispielsweise ist vorgesehen, daß die mehreren Werkzeuge in einer Längsrichtung nebeneinander angeordnet sind.

Besonders günstig ist es, wenn die mehreren Werkzeuge in der Längsrichtung in einer Reihe angeordnet sind.

Besonders zweckmäßig ist es dabei, wenn die Längsrichtung parallel zur Querrichtung verläuft, so daß ebenfalls eine Relativbewegung in der Querrichtung dazu eingesetzt werden kann, die einzelnen Werkzeuge des anderen zweiten Werkzeugträgers in Arbeitsstellung zu bringen.

Eine andere vorteilhafte Lösung der erfindungsgemäßen Drehmaschine sieht vor, daß ein anderer der zweiten Werkzeugträger als Werkzeugrevolver ausgebildet ist. Ein Werkzeugrevolver bietet die Möglichkeit, in einfacher Weise eines der Werkzeuge in Arbeitsstellung zu bringen, so daß anders als bei einem Linearwerkzeugträger kein großer Bewegungsraum für die zweite Arbeitsspindel erforderlich ist, um eines der Werkzeuge des anderen zweiten Werkzeugträgers in Arbeitsstellung zu bringen.

Weitere Merkmale und Vorteile der Erfindung sind Gegenstand der nachfolgenden Beschreibung sowie der zeichnerischen Darstellung einiger Ausführungsbeispiele.

### In der Zeichnung zeigen:

- Fig. 1: eine perspektivische Ansicht eines ersten Ausführungsbeispiels einer erfindungsgemäßen Drehmaschine;
- Fig. 2: eine vergrößerte ausschnittsweise Darstellung einer Einheit aus Langdrehführungsbüchse und zweitem frontseitigem Werkzeugträger mit der ersten Arbeitsspindel beim ersten Ausführungsbeispiel;
- Fig. 3: eine ausschnittsweise Schnittansicht längs Linie 3-3 in Fig. 1;
- Fig. 4: eine perspektivische Detailansicht ähnlich Fig. 1 mit Darstellung des ersten Arbeitsraums und des in der Perspektive gemäß Fig. 4 vor dem ersten Arbeitsraum liegenden zweiten Arbeitsraums beim ersten Ausführungsbeispiel;
- Fig. 5: eine Draufsicht in Richtung des Pfeils A in Fig. 1 unmittelbar vor einer gleichzeitigen Bearbeitung des ersten Werkstücks und des zweiten Werkstücks;
- Fig. 6: eine ausschnittsweise Darstellung eines Schnitts längs Linie 6-6 in Fig. 1;
- Fig. 7: eine Draufsicht in Richtung des Pfeils B in Fig. 1;
- Fig. 8: eine Darstellung ähnlich Fig. 4 eines zweiten Ausführungs-beispiels einer erfindungsgemäßen Drehmaschine;
- Fig. 9: eine Darstellung des zweiten Ausführungsbeispiels der erfindungsgemäßen Drehmaschine ähnlich Fig. 3 und
- Fig. 10: eine Darstellung des zweiten Ausführungsbeispiels der erfindungsgemäßen Drehmaschine ähnlich Fig. 7.

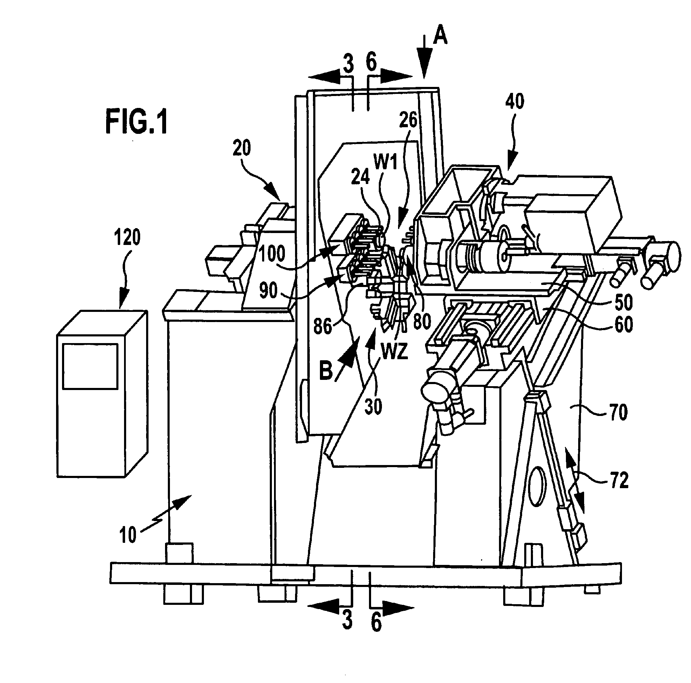

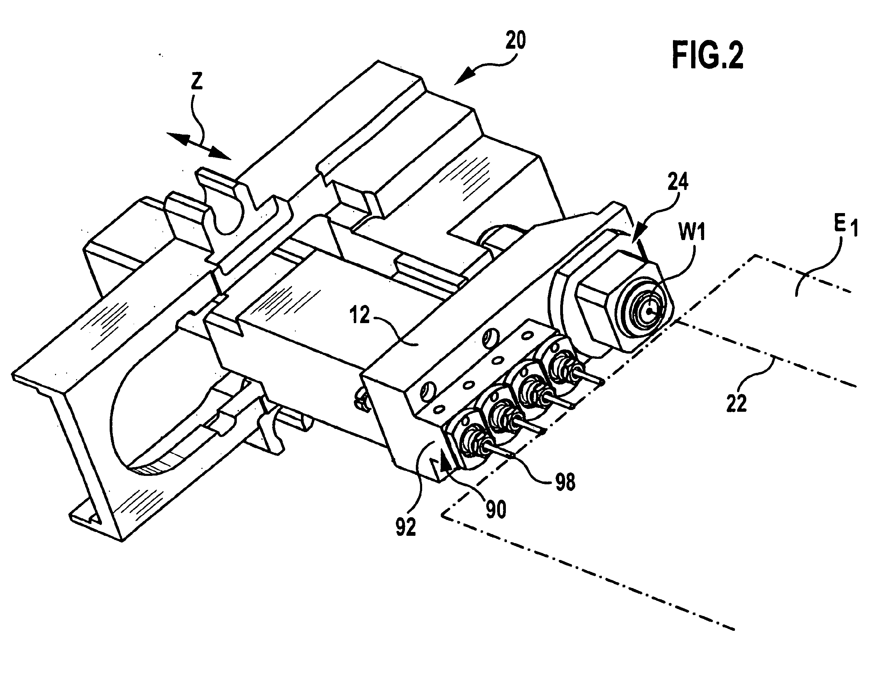

Ein erstes Ausführungsbeispiel einer erfindungsgemäßen Drehmaschine, dargestellt in Fig. 1, umfaßt ein Maschinengestell 10, an welchem, wie in Fig. 1 und 2 dargestellt, eine erste Arbeitsspindel 20 angeordnet ist, mit welcher ein erstes Werkstück W1 um eine erste Spindelachse 22 drehbar ist, wobei das Werkstück W1 in der ersten Arbeitsspindel 20 durch eine zeichnerisch nicht dargestellte erste Aufnahme gehalten ist.

Die erste Arbeitsspindel 20 ist dabei in einer parallel zur ersten Spindelachse 22 verlaufenden Z-Richtung relativ zum Maschinengestell 10 verschiebbar.

Außerdem ist das erste Werkstück W1 noch zusätzlich durch eine Langdrehführungsbüchse 24 geführt, welche angrenzend an einen ersten Arbeitsraum 26 am Maschinengestell 10 stationär gehalten ist, während die erste Arbeitsspindel 20 in Z-Richtung relativ zur Langdrehführungsbüchse 24 bewegbar ist, um das erste Werkstück W1 entsprechend der gewünschten Z-Position bei der Bearbeitung durch die Langdrehführungsbüchse 24 in Richtung der Spindelachse 22 verschieben zu können, so daß sich insgesamt das erste Werkstück W1 ausgehend von der ersten Arbeitsspindel 20 durch die Langdrehführungsbüchse 24 hindurch in den ersten Arbeitsraum 26 erstreckt, und dabei in dem ersten Arbeitsraum 26 eine umfangsseitige Bearbeitung erfolgen kann, beispielsweise mit einem im ersten Arbeitsraum 26 angeordneten ersten Werkzeugträger 30, welcher vorzugsweise als Werkzeugrevolver mit einem gegenüber einem nicht erkennbaren Revolvergehäuse um eine Revolverachse 34 drehbaren Revolverkopf 36 ausgebildet ist, der eine Vielzahl von Werkzeugen 38 trägt, von denen jeweils eines, beispielsweise das Werkzeug 38_{A} in eine Arbeitsstellung bringbar ist.

Der gesamte erste Werkzeugträger 30 ist dabei zur Bearbeitung des Werkstücks W1 in einer radial zur ersten Spindelachse 22 verlaufenden X-Richtung verfahrbar, um das in Arbeitsstellung stehende Werkzeug 38_{A} zum ersten Werkstück W1 hin entsprechend der zu bearbeitenden Fläche zustellen zu können.

Bei einer modifizierten Ausführungsform des ersten Ausführungsbeispiels ist es auch möglich, den ersten Werkzeugträger 30 zusätzlich noch in einer Y-Richtung quer zur X-Richtung zu bewegen, wobei die X-Richtung und die Y-Richtung in einer senkrecht zur ersten Spindelachse 22 verlaufenden Ebene liegen.

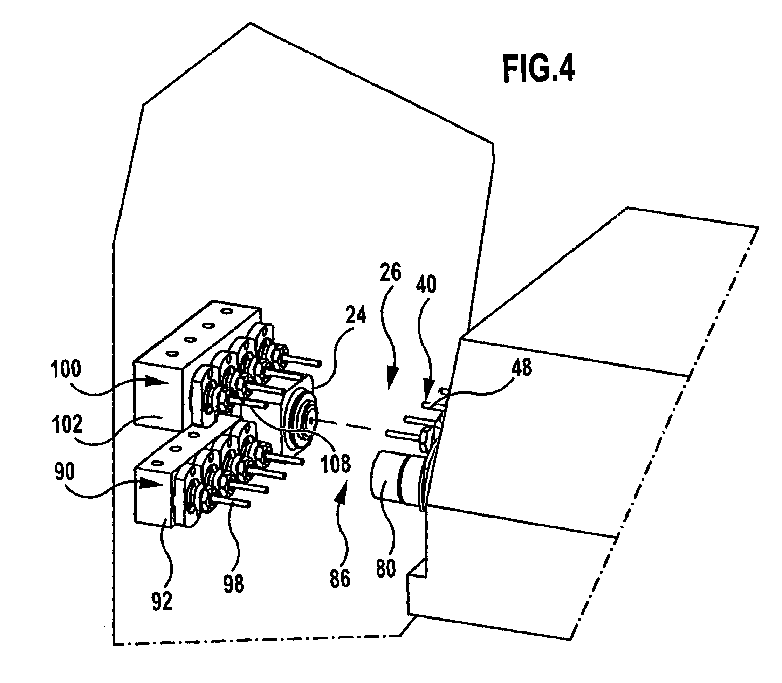

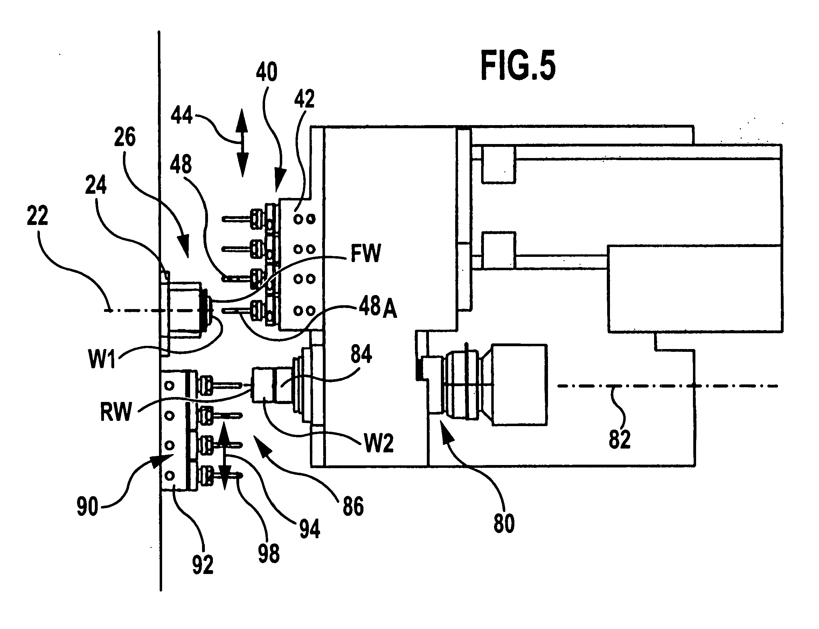

Die Werkzeuge 38 des ersten Werkzeugträgers 30 sind insbesondere für umfangsseitige Bearbeitungen des ersten Werkstücks W1 vorgesehen, während für frontseitige Bearbeitungen des ersten Werkstücks W1 auf einer der Langdrehführungsbüchse 24 gegenüberliegenden Seite des ersten Arbeitsraums 26, wie beispielsweise in Fig. 4 und Fig. 5 dargestellt, ein erster frontseitiger Werkzeugträger 40 vorgesehen ist, welcher ein Werkzeugträgergehäuse 42 aufweist, in welchem in einer Längsrichtung 44 aufeinanderfolgend in einer Reihe angeordnete Werkzeuge 48 gehalten sind, wobei jeweils eines der Werkzeuge 48, beispielsweise das Werkzeug 48_{A} in einer Arbeitsstellung steht und dabei dem in der Langdrehführungsbüchse 24 gehaltenen ersten Werkstück W1, vorzugsweise einer Frontseite FW desselben, zugewandt ist.

Unter dem Begriff "frontseitiger Werkzeugträger" ist dabei jeder Werkzeugträger zu verstehen, der auf einer der beiden in Richtung der jeweiligen Spindelachse gegenüberliegenden Frontseiten des Arbeitsraums angeordnet ist.

Ein derartiger frontseitiger Werkzeugträger ist insbesondere geeignet, Werkzeuge aufzunehmen, mit denen sich auch eine der beiden in Richtung der Spindelachse gegenüberliegenden Frontseiten des Werkstücks bearbeiten läßt. Es ist aber auch denkbar, in einen derartigen frontseitigen Werkzeugträger Werkzeuge einzusetzen, mit welchen sich eine umfangsseitige Bearbeitung, zumindest nahe der jeweiligen Frontseite des Werkstücks, durchführen läßt.

Zum Bewegen von einem der Werkzeuge 48 in die Arbeitsstellung und zur Zustellung dieses Werkzeugs 48 relativ zum ersten Werkstück W1 bei der Bearbeitung desselben, ist der erste frontseitige Werkzeugträger 40 in der Längsrichtung 44, die quer zur ersten Spindelachse 22 verläuft, und zusätzlich noch parallel zur ersten Spindelachse 22 verschiebbar.

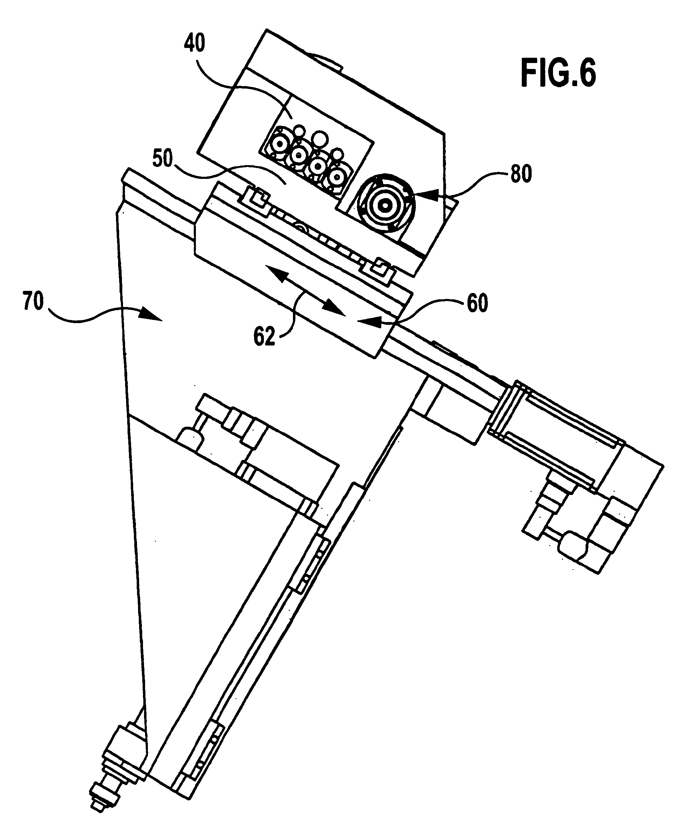

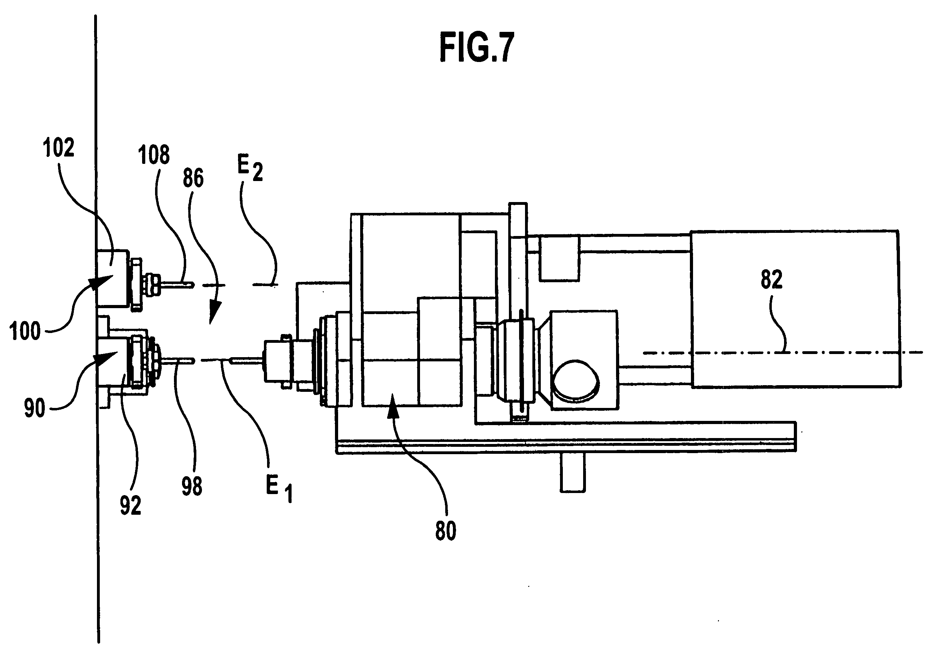

Dies ist dadurch realisierbar, daß, wie in Fig. 6 und 7 dargestellt, der das Werkzeugträgergehäuse 42 des ersten frontseitigen Werkzeugträgers 40 auf einem in Z-Richtung gegenüber dem Maschinengestell 10, das heißt parallel zur Richtung der ersten Spindelachse 22, bewegbaren Z-Schlitten 50 angeordnet ist, welcher seinerseits wiederum auf einem Querschlitten 60 sitzt, der in einer parallel zur Längsrichtung 44 verlaufenden Querrichtung 62 gegenüber dem Maschinengestell 10 bewegbar ist.

Vorzugsweise sitzt dabei der Querschlitten 60 auf einer Basis 70, die aus nachfolgend noch zu erläuternden Gründen, insgesamt als Basisschlitten ausgebildet ist und ihrerseits gegenüber dem Maschinengestell 10 in einer quer zur Querrichtung 62 und quer zur Spindelachse 22 verlaufenden Richtung 72 bewegbar ist, wobei die Richtung 72 vorzugsweise parallel zur X-Richtung des ersten Werkzeugträgers 30 verläuft.

Somit verlaufen sowohl die Querrichtung 62 als auch die Richtung 72 quer zur ersten Spindelachse 22 und vorzugsweise in einer senkrecht zu dieser verlaufenden Ebene, und stehen dabei insbesondere senkrecht aufeinander, so daß die Querrichtung 62 im klassischen Sinne auch als Y-Richtung bezogen auf die erste Spindelachse 22 bezeichnet werden kann.

Ohne Verschiebung des Basisschlittens 70 in Richtung 72 ist somit ein Wechsel zwischen den Werkzeugen 48 des ersten frontseitigen Werkzeugträgers 40 dadurch realisierbar, daß der erste frontseitige Werkzeugträger 40 durch Verschieben des Querschlittens 60 in der Querrichtung 62 quer zur ersten Spindelachse 22 und somit auch quer zum in der Langdrehführungsbüchse 24 geführten ersten Werkstück W1 bewegt wird.

Um eine Komplettbearbeitung von Werkstücken durchführen zu können, ist auf dem Z-Schlitten 50 noch eine zweite Arbeitsspindel 80 vorgesehen, die um eine zweite Spindelachse 82 drehbar ist und eine Werkzeugaufnahme 84 aufweist, mit welcher ein aus dem ersten Werkstück W1 durch Aufnehmen desselben im Bereich nahe der Frontseite FW mit der Aufnahme 84 hervorgegangenes zweites Werkstück W2 zur Bearbeitung fixierbar ist.

Vorzugsweise ist hierzu das Werkstück W2 in einem zweiten Arbeitsraum 86 bewegbar, welcher neben dem ersten Arbeitsraum 26 liegt, wobei zur Bearbeitung des zweiten Werkstücks W2 auf einer Rückseite RW ein zweiter frontseitiger Werkzeugträger 90 vorgesehen ist. Der zweite frontseitige Werkzeugträger 90 ist dabei der zweiten Arbeitsspindel 80 gegenüberliegend angeordnet und sitzt vorzugsweise an einem Trägerelement 12 des Maschinengestells 10, welches ebenfalls die Langdrehführungsbüchse 24 trägt, wie in Fig. 2 dargestellt.

Der zweite frontseitige Werkzeugträger 90 weist ein Werkzeugträgergehäuse 92 auf, in welchem in einer Längsrichtung 94 aufeinanderfolgend in einer Reihe angeordnete Werkzeuge 98 angeordnet sind, wobei die Längsrichtung 94 vorzugsweise parallel zur Querrichtung 62 verläuft.

Darüber hinaus ist insbesondere bei der erfindungsgemäßen Drehmaschine vorgesehen, daß sämtliche Werkzeuge 98 einer ersten Ebene E1 zugeordnet sind, welche durch die erste Spindelachse 22 hindurchverläuft und außerdem parallel zur Querrichtung 62 verläuft, wobei damit zwangsläufig auch die Längsrichtung 94 in der Ebene E1 liegt. Damit ist das zweite Werkstück W2 nur durch eine Bewegung desselben in der ersten Ebene E1 mit einem der Werkzeuge 98 bearbeitbar.

Ferner sind insbesondere auch bei der erfindungsgemäßen Drehmaschine die Werkzeuge 48 des ersten frontseitigen Werkzeugträgers 40 so angeordnet, daß sie dann der Ebene E1 zugeordnet sind, wenn diese auch die zweite Spindelachse 82 durchsetzt, wobei hierzu der Basisschlitten 70 in der Richtung 72 in eine geeignete Position zu verfahren ist, so daß die Bedingung hinsichtlich der zweiten Spindelachse 82 erfüllt ist. Zur Bearbeitung des ersten Werkstücks W1 verbleibt dieses stets so positioniert, daß die erste Spindelachse 22 in der ersten Ebene E1 liegt und die dieser ersten Ebene zugeordneten Werkzeuge 48 werden parallel zur ersten Ebene E1 bewegt.

Diese Ausrichtung der Werkzeuge 98 des zweiten frontseitigen Werkzeugträgers 90 und der Werkzeuge 48 des ersten frontseitigen Werkzeugträgers 40 hat den Vorteil, daß eine Bearbeitung des ersten Werkstücks W1 mit einem Werkzeug 48 gleichzeitig mit einer Bearbeitung des zweiten Werkstücks W2 mittels eines Werkzeugs 98 möglich ist, wobei die jeweils in Arbeitsstellung stehenden Werkzeuge 48 und 98 jeweils mit ihren Bezugspunkten relativ zur Ebene E1 und relativ zu den Spindelachsen 22 und 82 exakt positioniert sein müssen, so daß die beiden jeweils in Arbeitsstellung stehenden Werkzeuge 48 und 98 am jeweiligen Werkstück W1 bzw. W2 gleichzeitig einsetzbar sind.

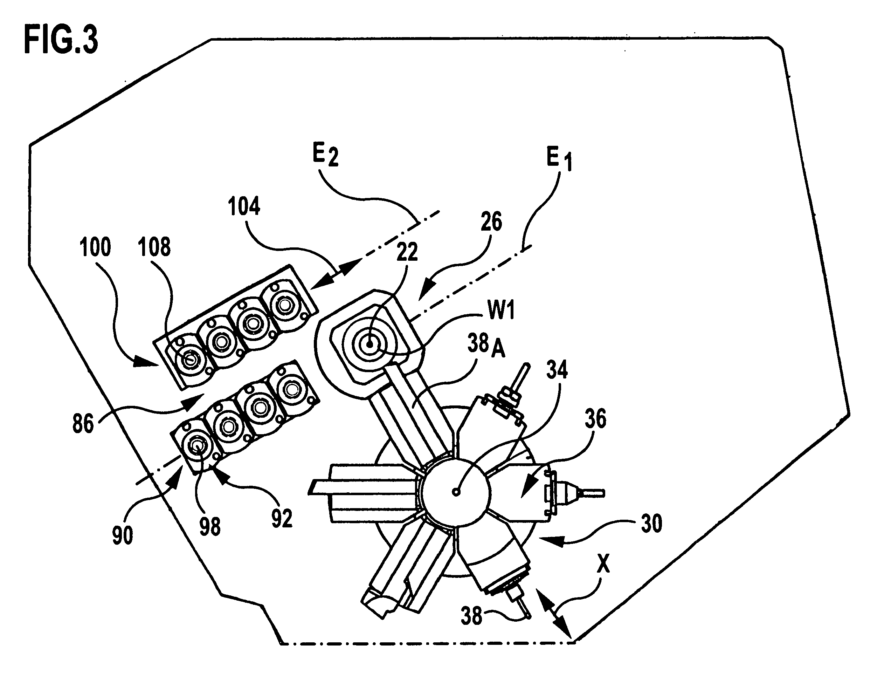

Zur Erweiterung der Bearbeitungsmöglichkeiten im zweiten Arbeitsraum 86 ist beim ersten Ausführungsbeispiel der erfindungsgemäßen Drehmaschine, dargestellt in den Fig. 1 bis 7, ein weiterer zweiter frontseitiger Werkzeugträger 100 auf derselben der zweiten Arbeitsspindel 80 gegenüberliegenden Seite des zweiten Arbeitsraums 86 wie der bereits erwähnte zweite frontseitige Werkzeugträger 90 vorgesehen, dessen Werkzeugträgergehäuse 102 im Abstand vom Werkzeugträgergehäuse 92 angeordnet ist und dessen Werkzeuge 108 in einer zweiten Ebene E2 wirksam sind, welche im Abstand von der Ebene E1 verläuft, wobei beide Ebenen E1 und E2 stationär relativ zum Maschinengestell 10 angeordnet sind.

Beispielsweise ist auch der weitere zweite frontseitige Werkzeugträger 100 mit in einer Längsrichtung 104 in Reihe aufeinanderfolgend angeordneten Werkzeugen 108 versehen, die dann alle in der stationär relativ zum Maschinengestell 10 verlaufenden zweiten Ebene E2 liegen.

Die zweite Ebene E2 ist dabei vorzugsweise auf einer dem ersten Werkzeugträger 30 gegenüberliegenden Seite der Ebene E1 angeordnet. Dies hat den Vorteil, daß beispielsweise eine Bearbeitung des ersten Werkstücks W1 mit den Werkzeugen 38 des ersten Werkzeugträgers 30 möglich ist, während gleichzeitig mit den in der zweiten Ebene E2 wirksamen Werkzeugen 108 des weiteren zweiten frontseitigen Werkzeugträgers 100 eine Bearbeitung des zweiten Werkstücks W2, aufgenommen in der zweiten Arbeitsspindel 80, erfolgen kann, wobei hierzu die zweite Arbeitsspindel 80 in der Richtung 72 durch Verschieben des Basisschlittens 70 verschoben wird, so daß den Werkzeugen 48 des ersten frontseitigen Werkzeugträgers 40 in diesem Fall kein Werkstück gegenübersteht, sondern diese bei einer Bewegung der zweiten Arbeitsspindel 80 in der Z-Richtung mittels des Z-Schlittens 50 in Richtung der Werkzeuge 108 ins Leere laufen.

Gleichzeitig ist durch Verschieben der zweiten Arbeitsspindel 80 mittels des Querschlittens 60 in der Querrichtung 62 eine Auswahl unter den verschiedenen Werkzeugen 108 des weiteren zweiten frontseitigen Werkzeugträgers 100 möglich.

Eine besonders bevorzugte Lösung sieht dabei vor, daß die beiden zweiten frontseitigen Werkzeugträger 90 und 100 identisch ausgebildet sind, so daß identische Baugruppen zur Realisierung derselben eingesetzt werden können.

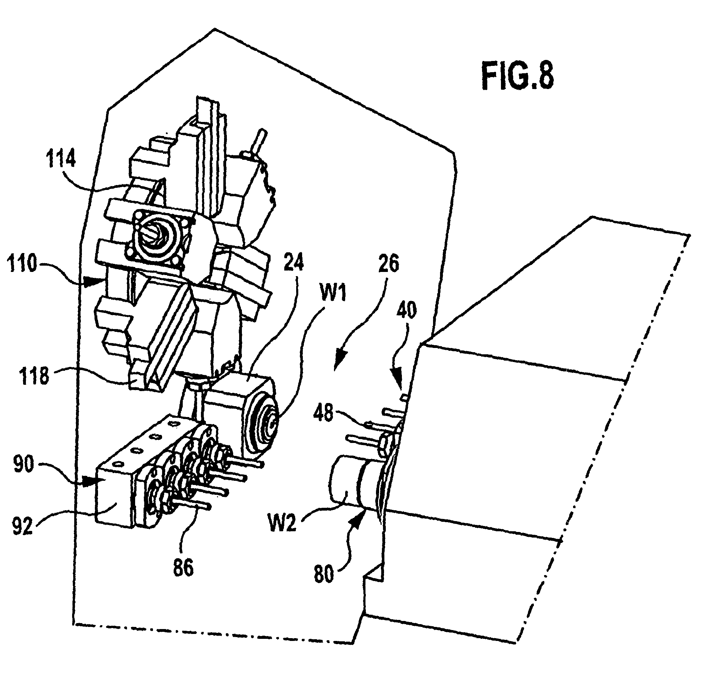

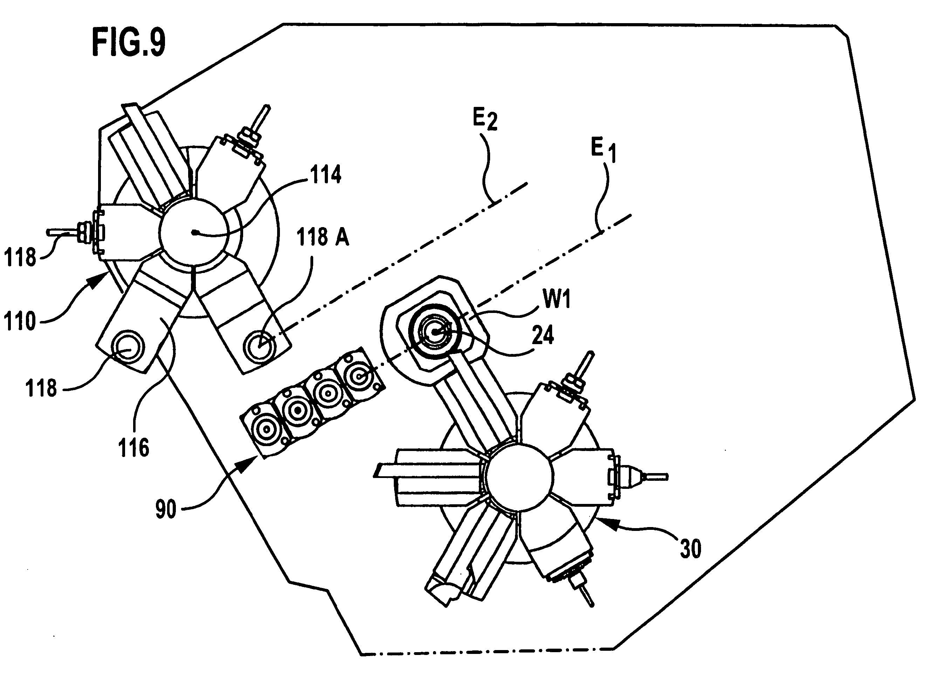

Bei einem zweiten Ausführungsbeispiel einer erfindungsgemäßen Drehmaschine, dargestellt in den Fig. 8, 9 und 10 sind diejenigen Elemente, die mit denen des ersten Ausführungsbeispiels identisch sind, mit denselben Bezugszeichen versehen, so daß hinsichtlich der Beschreibung derselben auf die Ausführungen zum ersten Ausführungsbeispiel vollinhaltlich Bezug genommen werden kann.

Im Gegensatz zum ersten Ausführungsbeispiel ist anstelle des weiteren zweiten frontseitigen Werkzeugträgers 100 ein zweiter Werkzeugträger 110 vorgesehen, welcher beispielsweise als Werkzeugrevolver ausgebildet ist und einen gegenüber einem nicht erkennbaren Revolvergehäuse um eine Revolverachse 114 drehbaren Revolverkopf 116 aufweist, an welchem eine Vielzahl von Werkzeugen 118 gehalten ist, wobei durch Drehen um die Revolverachse 114 eines der Werkzeuge 118, beispielsweise das Werkzeug 118A in eine Arbeitsstellung bringbar ist, in welcher es in der zweiten Ebene E2 wirksam ist, die in gleicher Weise wie beim ersten Ausführungsbeispiel stationär zum Maschinengestell 2, jedoch im Abstand von der Ebene E1 verläuft.

Ein Wechsel zwischen den Werkzeugen 118 erfolgt jedoch nicht durch Verschieben der zweiten Arbeitsspindel 80 in der Querrichtung 62, sondern durch Drehen des Revolverkopfes 116 um die Revolverachse 114.

Insbesondere ist der zweite Werkzeugträger 110 auf der dem ersten Werkzeugträger 30 gegenüberliegenden Seite der ersten Ebene E1 stationär am Maschinengestell 10 angeordnet, da die für die Bearbeitung des zweiten Werkstücks W2 erforderlichen Relativbewegungen zwischen diesem und dem in Arbeitsstellung stehenden Werkzeug 118A durch eine Bewegung der zweiten Arbeitsspindel 80 in der Querrichtung 62 und/oder in der Richtung 72 sowie in Z-Richtung mittels des Z-Schlittens 50 bezüglich de zweiten Ebene E2 erfolgen können.

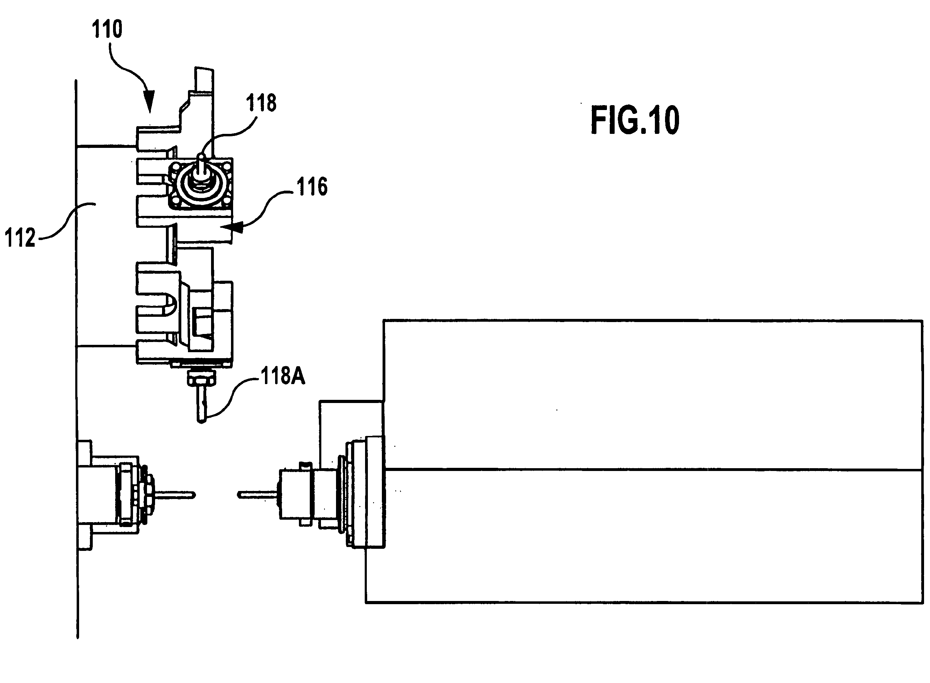

Ferner ist, wie in Fig. 10 dargestellt, der zweite Werkzeugträger 110 auch dazu einsetzbar, mit dem in Arbeitsstellung stehenden Werkzeug 118A auch umfangsseitige Bearbeitungen beim zweiten Werkstück W2 vorzunehmen, so daß der Einsatz der Werkzeuge 118 zur Bearbeitung der Rückseite RW des zweiten Werkstücks W2 eingesetzt werden kann, jedoch auch zusätzlich noch zur ergänzenden umfangsseitigen Bearbeitung desselben.

Hierzu kann der zweite Werkzeugträger 110 nach wie vor stationär am Maschinengestell 10 angeordnet sein und die Zustellung bei der Bearbeitung des zweiten Werkstücks W2 mittels des in Arbeitsstellung stehenden Werkzeugs 118A erfolgt bezüglich der zweiten Ebene E2 in X-Richtung durch Bewegen des Basisschlittens 70 in Richtung 72, die vorzugsweise parallel zur X-Richtung verläuft, und in Z-Richtung durch Bewegen der zweiten Arbeitsspindel 80 mittels des Z-Schlittens 50.

Darüber hinaus erfolgt bei beiden Ausführungsbeispielen der erfindungsgemäßen Drehmaschine eine Steuerung der Arbeitsspindeln 20 und 80 obwohl hinsichtlich ihrer Drehzahl als auch vorzugsweise hinsichtlich einer gesteuerten C-Achse mittels einer Steuerung 120, wobei diese Steuerung 120 darüber hinaus auch den ersten Werkzeugträger 30 hinsichtlich seiner Position in X-Richtung steuert und außerdem die Bewegung de Z-Schlittens 50, des Querschlittens 60 und des Basisschlittens 70 in Richtung 72 relativ zum Maschinengestell 10 positionsgenau steuert.

Darüber hinaus erfolgt mittels der Steuerung 120 vorzugsweise auch eine Steuerung der Drehung der Revolverköpfe 36 und 116 um die jeweiligen Revolverachsen 34 bzw. 114 sowie eine Ansteuerung der jeweils angetriebenen Werkzeuge in den einzelnen Werkzeugträgern 30, 40, 90, 100 und 110.

## Patentansprüche

1. Drehmaschine umfassend
ein Maschinengestell (10),
eine am Maschinengestell (10) gehaltene erste und um eine erste Spindelachse (22) drehbare Arbeitsspindel (20) mit einer ersten Aufnahme für ein erstes Werkstück (W1),
mindestens einen einem ersten Arbeitsraum (26) zugeordneten ersten Werkzeugträger (30), welcher zur Bearbeitung des ersten Werkstücks (W1) in einer X-Richtung quer zur ersten Spindelachse (22) gesteuert bewegbar ist,
eine um eine zweite Spindelachse (82) drehbare zweite Arbeitsspindel (80), welche eine zweite Werkstückaufnahme (84) für ein zweites Werkstück (W2) aufweist und welche gegenüber der ersten Arbeitsspindel (20) in einer quer zur X-Richtung verlaufenden Querrichtung (62) von einer mit der zweiten Spindelachse (82) zur ersten Spindelachse (22) koaxialen Übergabestellung in eine nicht koaxiale Arbeitsstellung bringbar ist, in welcher die erste (22) und zweite Spindelachse (82) im Abstand voneinander angeordnet sind,
einen ersten frontseitigen Werkzeugträger (40) zur Bearbeitung des ersten Werkstücks (W1), der durch eine Bewegung quer zur X-Richtung mit mindestens einem Werkzeug (48) von einer inaktiven in eine aktive Stellung und umgekehrt bewegbar ist,
und mindestens einen in einem gegenüber dem ersten Arbeitsraum (26) quer zur ersten Spindelachse (22) versetzt angeordneten zweiten Arbeitsraum (86) angeordneten zweiten Werkzeugträger (90, 100, 110) zur Bearbeitung des zweiten Werkstücks (W2), welcher mindestens zwei Werkzeuge (98) trägt, mit denen das zweite Werkstück (W2) durch eine gesteuerte Bewegung in einer quer zur X-Richtung verlaufenden ersten Ebene (E1) in dem zweiten Arbeitsraum (86) bearbeitbar ist, **dadurch gekennzeichnet, daß** an dem Maschinengestell (10) mindestens zwei zweite Werkzeugträger (90, 100, 110) vorgesehen sind, daß die mindestens zwei zweiten Werkzeugträger (90, 100, 110) dem zweiten Arbeitsraum (86) derart zugeordnet sind, daß eine Bearbeitung des zweiten Werkstücks (W2) im zweiten Arbeitsraum (86) ohne Beeinträchtigung der Bearbeitung des ersten Werkstücks (W1) im ersten Arbeitsraum (26) erfolgt, daß einer der zweiten Werkzeugträger (90) frontseitig des zweiten Arbeitsraums (86) angeordnet ist und daß ein weiterer (100, 110) der zweiten Werkzeugträger (90, 100, 110) Werkzeuge trägt, mit denen das zweite Werkstück (W2) durch eine gesteuerte Bewegung der zweiten Arbeitsspindel (80) bezüglich einer einen Abstand von der ersten Ebene (E1) aufweisenden und parallel zur ersten Ebene (E1) verlaufenden zweiten Ebene (E2) im zweiten Arbeitsraum (86) bearbeitbar ist.

2. Drehmaschine nach Anspruch 1, **dadurch gekennzeichnet, daß** die erste Ebene (E1) stationär bezüglich des Maschinengestells (10) angeordnet ist.

3. Drehmaschine nach Anspruch 2, **dadurch gekennzeichnet, daß** die erste Ebene (E1) durch die erste Spindelachse (22) hindurch verläuft.

4. Drehmaschine nach einem der voranstehenden Ansprüche, **dadurch gekennzeichnet, daß** die zweite Ebene (E2) auf einer dem ersten Werkzeugträger (30) gegenüberliegenden Seite der ersten Ebene (E1) angeordnet ist.

5. Drehmaschine nach einem der voranstehenden Ansprüche, **dadurch gekennzeichnet, daß** die zweite Ebene (E2) stationär bezüglich des Maschinengestells (10) angeordnet ist.

6. Drehmaschine nach einem der voranstehenden Ansprüche, **dadurch gekennzeichnet, daß** die erste Ebene (E1) parallel zur Querrichtung (62) verläuft.

7. Drehmaschine nach einem der voranstehenden Ansprüche, **dadurch gekennzeichnet, daß** die Ebenen (E1, E2) ungefähr senkrecht zur X-Richtung verlaufen.

8. Drehmaschine nach einem der voranstehenden Ansprüche, **dadurch gekennzeichnet, daß** der erste frontseitige Werkzeugträger (40) durch eine Bewegung parallel zur Querrichtung (62) zwischen der inaktiven und der aktiven Stellung hin- und herbewegbar ist.

9. Drehmaschine nach Anspruch 8, **dadurch gekennzeichnet, daß** der erste frontseitige Werkzeugträger (40) und die zweite Arbeitsspindel (80) auf einem gemeinsamen, in der Querrichtung (62) bewegbaren Querschlitten (60) sitzen.

10. Drehmaschine nach einem der voranstehenden Ansprüche, **dadurch gekennzeichnet, daß** der erste frontseitige Werkzeugträger (40) und die zweite Arbeitsspindel (80) auf einem gemeinsamen, in Richtung quer zur Querrichtung (62) und quer zur ersten Spindelachse (22) bewegbaren Basisschlitten (70) sitzen.

11. Drehmaschine nach Anspruch 10, **dadurch gekennzeichnet, daß** der Querschlitten (60) auf dem gemeinsamen Basisschlitten (70) in der Querrichtung (62) bewegbar angeordnet ist.

12. Drehmaschine nach einem der voranstehenden Ansprüche, **dadurch gekennzeichnet, daß** der erste frontseitige Werkzeugträger (40) in Richtung parallel zur ersten Spindelachse (22) bewegbar ist.

13. Drehmaschine nach Anspruch 12, **dadurch gekennzeichnet, daß** der erste frontseitige Werkzeugträger (40) auf einem in Z-Richtung bewegbaren Z-Schlitten (50) sitzt, welcher seinerseits auf dem Querschlitten (60) sitzt.

14. Drehmaschine nach einem der voranstehenden Ansprüche, **dadurch gekennzeichnet, daß** die zweite Arbeitsspindel (80) in Richtung parallel zur zweiten Spindelachse (82) bewegbar ist.

15. Drehmaschine nach Anspruch 14, **dadurch gekennzeichnet, daß** die zweite Arbeitsspindel auf einem Z-Schlitten (50) sitzt, welcher seinerseits auf dem Querschlitten (60) angeordnet ist.

16. Drehmaschine nach Anspruch 15, **dadurch gekennzeichnet, daß** der erste frontseitige Werkzeugträger (40) und die zweite Arbeitsspindel (80) gemeinsam in Richtung der Spindelachsen (22, 82) bewegbar sind.

17. Drehmaschine nach einem der voranstehenden Ansprüche, **dadurch gekennzeichnet, daß** der erste frontseitige Werkzeugträger (40) in einer Längsrichtung (44) nebeneinander angeordnete Werkzeuge (48) aufweist.

18. Drehmaschine nach Anspruch 17, **dadurch gekennzeichnet, daß** die Werkzeuge (48) in einer in der Längsrichtung (44) verlaufenden Reihe angeordnet sind.

19. Drehmaschine nach Anspruch 17 oder 18, **dadurch gekennzeichnet, daß** die Längsrichtung (44) parallel zur Querrichtung (62) verläuft.

20. Drehmaschine nach einem der Ansprüche, **dadurch gekennzeichnet, daß** bei einem Verlauf der zweiten Spindelachse (82) in der ersten Ebene (E1) die Werkzeuge (48) des ersten frontseitigen Werkzeugträgers (40) ebenfalls der ersten Ebene (E1) zugeordnet sind.

21. Drehmaschine nach einem der voranstehenden Ansprüche, **dadurch gekennzeichnet, daß** einer der zweiten Werkzeugträger (90) frontseitig des zweiten Arbeitsraums angeordnet ist.

22. Drehmaschine nach Anspruch 21, **dadurch gekennzeichnet, daß** einer der zweiten Werkzeugträger (90) mehrere in einer Längsrichtung (94) nebeneinander angeordnete Werkzeuge (98) aufweist.

23. Drehmaschine nach Anspruch 22, **dadurch gekennzeichnet, daß** die Werkzeuge (98) in einer in der Längsrichtung (94) verlaufenden Reihe angeordnet sind.

24. Drehmaschine nach Anspruch 22 oder 23, **dadurch gekennzeichnet, daß** die Längsrichtung (94) parallel zur Querrichtung (62) verläuft.

25. Drehmaschine nach einem der voranstehenden Ansprüche, **dadurch gekennzeichnet, daß** einer der zweiten Werkzeugträger (100) in Richtungen (X, 62) quer zu den Spindelachsen (22, 82) stationär am Maschinengestell (10) angeordnet ist.

26. Drehmaschine nach einem der voranstehenden Ansprüche, **dadurch gekennzeichnet, daß** einer der zweiten Werkzeugträger (90, 100, 110) stationär am Maschinengestell (10) angeordnet ist.

27. Drehmaschine nach einem der voranstehenden Ansprüche, **dadurch gekennzeichnet, daß** ein anderer der zweiten Werkzeugträger (100) frontseitig des zweiten Arbeitsraums (86) angeordnet ist.

28. Drehmaschine nach einem der voranstehenden Ansprüche, **dadurch gekennzeichnet, daß** der andere zweite Werkzeugträger (100) mehrere Werkzeuge (108) aufweist.

29. Drehmaschine nach Anspruch 28, **dadurch gekennzeichnet, daß** die mehreren Werkzeuge (108) in einer Längsrichtung (104) nebeneinander angeordnet sind.

30. Drehmaschine nach Anspruch 29, **dadurch gekennzeichnet, daß** die mehreren Werkzeuge (108) in der Längsrichtung (104) in einer Reihe angeordnet sind.

31. Drehmaschine nach Anspruch 29 oder 30, **dadurch gekennzeichnet, daß** die Längsrichtung parallel zur Querrichtung (62) verläuft.

32. Drehmaschine nach einem der Ansprüche 1 bis 28, **dadurch gekennzeichnet, daß** ein anderer der zweiten Werkzeugträger (110) als Werkzeugrevolver ausgebildet ist.

## Claims

1. A lathe comprising
a machine frame (10),
a first working-spindle (20) having a first seating for a first workpiece (W1) which is held on the machine frame (10) and is rotatable about a first spindle axis (22),
at least one first tool carrier (30) which is assigned to a first work space (26) and is movable in controlled manner in an X-direction transverse to the first spindle axis (22) for the purposes of machining the first workpiece (W1),
a second working-spindle (80) which is rotatable about a second spindle axis (82) and comprises a second workpiece seating (84) for a second workpiece (W2) and which is moveable with respect to the first working-spindle (20) in a transverse direction (62) running transversely relative to the X-direction from a transfer position whereat the second spindle axis (82) is coaxial relative to the first spindle axis (22) into a non coaxial working position in which the first (22) and the second spindle axis (82) are arranged to be spaced from one another,
a first front-end tool carrier (40) for machining the first workpiece (W1) which is movable with at least one tool (48) from an inactive into an active position and vice versa by a movement transverse to the X-direction,
and at least one second tool carrier (90, 100, 110) for machining the second workpiece (W2) which is arranged in a second work space (86) that is displaced with respect to the first work space (26) transversely relative to the first spindle axis (22) and which carries at least two tools (98) with the aid of which the second workpiece (W2) is machinable in the second work space (86) by a controlled movement in a first plane (E1) running transversely relative to the X-direction,
**characterised in that** at least two second tool carriers (90, 100, 110) are provided on the machine frame (10), **in that** the at least two second tool carriers (90, 100, 110) are assigned to the second work space (86) in such a manner that machining of the second workpiece (W2) in the second work space (86) is effected without impairing the machining of the first workpiece (W1) in the first work space (26), **in that** one of the second tool carriers (90) is arranged at the front-end of the second work space (86), and **in that** a further one (100, 110) of the second tool carriers (90, 100, 110) carries tools with the aid of which the second workpiece (W2) is machinable in the second work space (86) by means of a controlled movement of the second working-spindle (80) with reference to a second plane (E2) that is spaced from the first plane (E1) and is parallel to the first plane (E1).

2. A lathe in accordance with Claim 1, **characterised in that** the first plane (E1) is arranged to be stationary with respect to the machine frame (10).

3. A lathe in accordance with Claim 2, **characterised in that** the first plane (E1) runs through the first spindle axis (22).

4. A lathe in accordance with any of the preceding Claims, **characterised in that** the second plane (E2) is arranged on a side of the first plane (E1) which is opposite the first tool carrier (30).

5. A lathe in accordance with any of the preceding Claims, **characterised in that** the second plane (E2) is arranged to be stationary with respect to the machine frame (10).

6. A lathe in accordance with any of the preceding Claims, **characterised in that** the first plane (E1) runs in parallel with the transverse direction (62).

7. A lathe in accordance with any of the preceding Claims, **characterised in that** the planes (E1, E2) run approximately perpendicularly to the X-direction.

8. A lathe in accordance with any of the preceding Claims, **characterised in that** the first front-end tool carrier (40) is movable between the inactive and the active position and vice versa by a movement parallel to the transverse direction (62).

9. A lathe in accordance with Claim 8, **characterised in that** the first front-end tool carrier (40) and the second working-spindle (80) are seated on a common transverse carriage (60) that is movable in the transverse direction (62).

10. A lathe in accordance with any of the preceding Claims, **characterised in that** the first front-end tool carrier (40) and the second working-spindle (80) are seated on a common base carriage (70) which is movable in a direction that is transverse to the transverse direction (62) and transverse to the first spindle axis (22).

11. A lathe in accordance with Claim 10, **characterised in that** the transverse carriage (60) is arranged on the common base carriage (70) such as to be movable in the transverse direction (62).

12. A lathe in accordance with any of the preceding Claims, **characterised in that** the first front-end tool carrier (40) is movable in a direction parallel to the first spindle axis (22).

13. A lathe in accordance with Claim 12, **characterised in that** the first front-end tool carrier (40) is seated on a Z-carriage (50) which is movable in the Z-direction and which, for its part, is seated on the transverse carriage (60).

14. A lathe in accordance with any of the preceding Claims, **characterised in that** the second working-spindle (80) is movable in a direction parallel to the second spindle axis (82).

15. A lathe in accordance with Claim 14, **characterised in that** the second working-spindle is seated on a Z-carriage (50) which, for its part, is arranged on the transverse carriage (60).

16. A lathe in accordance with Claim 15, **characterised in that** the first front-end tool carrier (40) and the second working-spindle (80) are movable together in the direction of the spindle axes (22, 82).

17. A lathe in accordance with any of the preceding Claims, **characterised in that** the first front-end tool carrier (40) comprises tools (48) which are arranged next to one another in a longitudinal direction (44).

18. A lathe in accordance with Claim 17, **characterised in that** the tools (48) are arranged in a row running in the longitudinal direction (44).

19. A lathe in accordance with Claim 17 or 18, **characterised in that** the longitudinal direction (44) runs parallel to the transverse direction (62).

20. A lathe in accordance with any of the Claims, **characterised in that**, in the course of a movement of the second spindle axis (82) in the first plane (E1), the tools (48) of the first front-end tool carrier (40) are likewise assigned to the first plane (E1).

21. A lathe in accordance with any of the preceding Claims, **characterised in that** one of the second tool carriers (90) is arranged at the front-end of the second work space.

22. A lathe in accordance with Claim 21, **characterised in that** one of the second tool carriers (90) comprises several tools (98) arranged next to one another in a longitudinal direction (94).

23. A lathe in accordance with Claim 22, **characterised in that** the tools (98) are arranged in a row running in the longitudinal direction (94).

24. A lathe in accordance with Claim 22 or 23, **characterised in that** the longitudinal direction (94) runs parallel to the transverse direction (62).

25. A lathe in accordance with any of the preceding Claims, **characterised in that** one of the second tool carriers (100) is arranged to be stationary on the machine frame (10) in directions (X, 62) transverse to the spindle axes (22, 82).

26. A lathe in accordance with any of the preceding Claims, **characterised in that** one of the second tool carriers (90, 100, 110) is arranged to be stationary on the machine frame (10).

27. A lathe in accordance with any of the preceding Claims, **characterised in that** another one of the second tool carriers (100) is arranged at the front-end of the second work space (86).

28. A lathe in accordance with any of the preceding Claims, **characterised in that** the other second tool carrier (100) comprises several tools (108).

29. A lathe in accordance with Claim 28, **characterised in that** the several tools (108) are arranged next to one another in a longitudinal direction (104).

30. A lathe in accordance with Claim 29, **characterised in that** the several tools (108) are arranged in a row in the longitudinal direction (104).

31. A lathe in accordance with Claim 29 or 30, **characterised in that** the longitudinal direction runs parallel to the transverse direction (62).

32. A lathe in accordance with any of the Claims 1 to 28, **characterised in that** another one of the second tool carriers (110) is in the form of a tool turret.

## Revendications

1. Tour, comprenant
un bâti de machine (10),
une première broche d'usinage(20) maintenue sur le bâti de machine (10) et rotative autour d'un premier axe de broche (22), avec un premier attachement pour une première pièce (W1),
au moins un premier support d'outil (30) associé à un premier compartiment d'usinage (26), déplaçable par commande transversalement au premier axe de broche (22) dans une direction X pour l'usinage de la première pièce (W1),
une deuxième broche d'usinage (80) rotative autour d'un deuxième axe de broche (82), comportant un deuxième attachement de pièce (84) pour une deuxième pièce (W2) et pouvant être déplacée relativement à la première broche d'usinage (20) dans une direction transversale (62) s'étendant transversalement à la direction X, d'une position de transfert où le deuxième axe de broche (82) est coaxial au premier axe de broche (22) vers une position d'usinage non coaxiale où le premier (22) et le deuxième (82) axes de broche sont à distance l'un de l'autre,
un premier support d'outil (40) frontal pour l'usinage de la première pièce (W1), déplaçable par mouvement transversal à la direction X, avec au moins un outil (48) d'une position inactive vers une position active et inversement,
et au moins un deuxième support d'outil (90, 100, 110) disposé dans un deuxième compartiment d'usinage (86) décalé transversalement au premier axe de broche (22) relativement au premier compartiment d'usinage (26) pour l'usinage de la deuxième pièce (W2) et supportant au moins deux outils (98) au moyen desquels la deuxième pièce (W2) est usinable par un déplacement commandé sur un premier plan (E1) s'étendant transversalement à la direction X dans le deuxième compartiment d'usinage (86),
**caractérisé en ce que**, sur le bâti de machine (10), sont prévus au moins deux deuxièmes supports d'outil (90, 100, 110), **en ce que** lesdits deux deuxièmes supports d'outil ou plus (90, 100, 110) sont associés au deuxième compartiment d'usinage (86) de manière à permettre un usinage de la deuxième pièce (W2) dans le deuxième compartiment d'usinage (86) sans affecter l'usinage de la première pièce (W1) dans le premier compartiment d'usinage (26), **en ce qu'**un des deuxièmes supports d'outil (90) est disposé frontalement dans le deuxième compartiment d'usinage (86) et **en ce qu'**un autre (100, 110) des deuxièmes supports d'outil (90, 100, 110) supporte des outils au moyen desquels la deuxième pièce (W2) est usinable par un déplacement commandé de la deuxième broche d'usinage (80) relativement à un deuxième plan (E2) espacé du premier plan (E1) et s'étendant parallèlement au premier plan (E1) dans le deuxième compartiment d'usinage (86).

2. Tour selon la revendication 1, **caractérisé en ce que** le premier plan (E1) est fixe par rapport au bâti de machine (10).

3. Tour selon la revendication 2, **caractérisé en ce que** le premier plan (E1) traverse le premier axe de broche (22).

4. Tour selon l'une des revendications précédentes, **caractérisé en ce que** le deuxième plan (E2) est situé du côté du premier plan (E1) opposé au premier support d'outil (30).

5. Tour selon l'une des revendications précédentes, **caractérisé en ce que** le deuxième plan (E2) est fixe par rapport au bâti de machine (10).

6. Tour selon l'une des revendications précédentes, **caractérisé en ce que** le premier plan (E1) s'étend parallèlement à la direction transversale (62).

7. Tour selon l'une des revendications précédentes, **caractérisé en ce que** les plans (E1, E2) sont sensiblement perpendiculaires à la direction X.

8. Tour selon l'une des revendications précédentes, **caractérisé en ce que** le premier support d'outil (40) frontal est déplaçable en va-et-vient entre la position inactive et la position active par un mouvement parallèle à la direction transversale (62).

9. Tour selon la revendication 8, **caractérisé en ce que** le premier support d'outil (40) frontal et la deuxième broche d'usinage (80) reposent sur un chariot transversal (60) commun, déplaçable en direction transversale (62).

10. Tour selon l'une des revendications précédentes, **caractérisé en ce que** le premier support d'outil (40) frontal et la deuxième broche d'usinage (80) reposent sur un chariot de base (70) commun, déplaçable transversalement à la direction transversale (62) et transversalement au premier axe de broche (22).

11. Tour selon la revendication 10, **caractérisé en ce que** le chariot transversal (60) est disposé sur le chariot de base (70) commun et déplaçable en direction transversale (62).

12. Tour selon l'une des revendications précédentes, **caractérisé en ce que** le premier support d'outil (40) frontal est déplaçable dans une direction parallèle au premier axe de broche (22).

13. Tour selon la revendication 12, **caractérisé en ce que** le premier support d'outil (40) frontal repose sur un chariot Z (50) déplaçable dans une direction Z, lequel repose sur le chariot transversal (60).

14. Tour selon l'une des revendications précédentes, **caractérisé en ce que** la deuxième broche d'usinage (80) est déplaçable dans une direction parallèle au deuxième axe de broche (82).

15. Tour selon la revendication 14, **caractérisé en ce que** la deuxième broche d'usinage repose sur un chariot Z (50), lequel repose sur le chariot transversal (60).

16. Tour selon la revendication 15, **caractérisé en ce que** le premier support d'outil (40) frontal et la deuxième broche d'usinage (80) sont déplaçables en commun dans la direction des axes de broche (22, 82).

17. Tour selon l'une des revendications précédentes, **caractérisé en ce que** le premier support d'outil (40) frontal comprend des outils (48) disposés côte à côte dans une direction longitudinale (44).

18. Tour selon la revendication 17, **caractérisé en ce que** les outils (48) sont disposés sur une rangée s'étendant dans la direction longitudinale (44).

19. Tour selon la revendication 17 ou la revendication 18, **caractérisé en ce que** la direction longitudinale (44) s'étend parallèlement à la direction transversale (62).

20. Tour selon l'une des revendications précédentes, **caractérisé en ce que** lors d'un déplacement du deuxième axe de broche (82) sur le premier plan (E1), les outils (48) du premier support d'outil frontal (40) sont également associés au premier plan (E1).

21. Tour selon l'une des revendications précédentes, **caractérisé en ce qu'**un des deuxièmes supports d'outil (90) est disposé frontalement dans le deuxième compartiment d'usinage.

22. Tour selon la revendication 21, **caractérisé en ce qu'**un des deuxièmes supports d'outil (90) comprend plusieurs outils (98) disposés côte à côte dans une direction longitudinale (94).

23. Tour selon la revendication 22, **caractérisé en ce que** les outils (98) sont disposés sur une rangée s'étendant dans la direction longitudinale (94).

24. Tour selon la revendication 22 ou la revendication 23, **caractérisé en ce que** la direction longitudinale (94) s'étend parallèlement à la direction transversale (62).

25. Tour selon l'une des revendications précédentes, **caractérisé en ce qu'**un des deuxièmes supports d'outil (100) est fixement disposé sur le bâti de machine (10) transversalement aux axes de broche (22, 82) dans des directions (X, 62).

26. Tour selon l'une des revendications précédentes, **caractérisé en ce qu'**un des deuxièmes supports d'outil (90, 100, 110) est fixement disposé sur le bâti de machine (10).

27. Tour selon l'une des revendications précédentes, **caractérisé en ce qu'**un autre des deuxièmes supports d'outil (100) est disposé frontalement dans le deuxième compartiment d'usinage (86).

28. Tour selon l'une des revendications précédentes, **caractérisé en ce que** l'autre deuxième support d'outil (100) comprend plusieurs outils (108).

29. Tour selon la revendication 28, **caractérisé en ce que** les plusieurs outils (108) sont disposés côte à côte dans une direction longitudinale (104).

30. Tour selon la revendication 29, **caractérisé en ce que** les plusieurs outils (108) sont disposés sur une rangée s'étendant dans la direction longitudinale (104).

31. Tour selon la revendication 29 ou la revendication 30, **caractérisé en ce que** la direction longitudinale s'étend parallèlement à la direction transversale (62).

32. Tour selon l'une des revendications 1 à 28, **caractérisé en ce qu'**un autre des deuxièmes supports d'outil (110) est réalisé comme tourelle revolver d'outils.
